# FASCICULE DE BREVET EUROPEEN

(11) **EP 3 213 264 B1**
(45) Date de publication et mention de la délivrance du brevet: **22.04.2020**
(21) Numéro de dépôt: 15794834.0
(22) Date de dépôt: 23.10.2015
(51) Int. Cl.: G06K 19/14, G06K 19/10, G06K 19/077

(54) **PROCÉDÉ D'AUTHENTIFICATION DE L'ENSEMBLE DE FERMETURE D'UN RÉCIPIENT**
VERFAHREN ZUR AUTHENTIFIZIERUNG DES VERSCHLUSSES EINES BEHÄLTERS
METHOD FOR AUTHENTICATION OF THE CLOSURE ASSEMBLY OF A CONTAINER

(30) Priorité: 27.10.2014 FR 1460306
(43) Date de publication de la demande: 06.09.2017
(73) Titulaire: Les Bouchages Delage, 16130 Gensac la Pallue (FR)
(72) Inventeur: CLERE, Laurent, 16100 Cognac (FR); LOUSTAUDAUDINE, Christophe, 74300 Thyez (FR)
(74) Mandataire: Ipside
(86) Numéro de dépôt international: PCT/EP2015/074627
(87) Numéro de publication internationale: WO 2016/066548

(56) Documents cités:
- WO-A1-03/038767
- WO-A1-2014/037666
- FR-A1- 2 667 576
- US-A1- 2002 185 544
- US-A1- 2006 086 791

## Description

### ARRIERE-PLAN DE L'INVENTION

### Domaine de l'invention

La présente invention concerne un procédé d'authentification de l'ensemble de fermeture d'un récipient afin d'établir l'intégrité et l'authenticité du contenu de ce récipient.

La présente invention concerne encore un ensemble de fermeture pour la mise en œuvre de ce procédé d'authentification.

### Arrière-plan technologique

Il est connu de fermer un récipient comportant un col comprenant à l'intérieur une ouverture pour le passage d'un fluide contenu dans ce récipient, avec un ensemble de fermeture comprenant un bouchon et une coiffe.

Cette coiffe qui peut être un manchon thermorétractable recouvre le bouchon et une partie du col de manière à lier ce bouchon au récipient. Elle vient également habiller ce récipient.

Par bouchon, on entend un obturateur massique, notamment destiné à obturer un récipient en étant inséré par force dans le col de ce récipient.

On sait également que des faussaires utilisent des bouteilles vides et des bouchons appartenant à des châteaux ou à des producteurs de spiritueux de grande notoriété pour tromper les consommateurs sur le contenu réel de ces bouteilles, en les remplissant avec des liquides de moindre qualité.

Ces dernières années, diverses solutions techniques ont été développées pour tenter de lutter contre cette contrefaçon en forte expansion.

On connaît ainsi des coiffes présentant des signes invisibles tels que des dessins, lesquels ne sont révélés que par exposition de cette coiffe à une lumière ultraviolette.

Toutefois, une telle solution peut être copiée assez aisément par des faussaires.

On connaît encore des muselets dits d'inviolabilités visant à garantir le contenu d'une bouteille avant premier usage en formant un suremballage venant emprisonner de manière définitive la fermeture de cette bouteille.

Bien que donnant de bons résultats, une telle solution technique peut encore être améliorée.

D'une part, elle peut s'avérer assez inesthétique.

D'autre part, la libération malveillante du muselet ne laisse aucun signe visible sur la bouteille. La bouteille peut être présentée au consommateur final après échange de son contenu sans que ce dernier n'ait de moyen à sa disposition lui permettant de constater la contrefaçon.

De plus, les solutions de l'art antérieur ci-dessus rappelées ne peuvent contenir aucune information spécifique sur le contenu de la bouteille.

Il est connu, par ailleurs, d'utiliser des étiquettes mettant en œuvre une solution d'identification sans contact RFID (identification par radiofréquence) comme dispositif antivol.

Une telle étiquette est typiquement collée sur la surface du récipient qu'elle protège, par exemple sur le suremballage d'un produit cosmétique.

Toutefois, une manière assez facile de contourner un tel dispositif antivol est de décoller ce dernier de son support.

Cette solution a cependant récemment été mise en œuvre pour protéger le contenu d'une bouteille pourvue d'un col et contenant un liquide tel qu'un vin ou un spiritueux.

On a ainsi proposé d'insérer une étiquette RFID dans le col de la bouteille en plaçant celle-ci entre le bouchon et la coiffe recouvrant la partie supérieure de cette bouteille. Pour dissuader un éventuel faussaire d'échanger le contenu de la bouteille, cette étiquette RFID est désactivée automatiquement dès le retrait de la capsule. Par exemple, la demande internationale WO 2014/037666 A1 propose une fermeture comportant une étiquette RFID pour authentification étant détruite lors de l'ouverture d'une bouteille.

Bien qu'un tel dispositif participe au renforcement de la protection du contenu d'une bouteille en rendant la contrefaçon plus compliquée, il peut encore s'avérer insuffisant pour garantir l'authenticité de boissons dites « premium ».

En effet, les faussaires de réseaux organisés sont prêts à produire et insérer leur propre étiquette RFID après avoir 2A ngé les contenus de bouteilles issues de châteaux jouissant d'une grande notoriété.

La demande de brevet N° US 2002/0185544 A1 propose une solution d'authentification dans laquelle une étiquette de données RFID et un marqueur chimique sont insérés dans le bouchon d'une bouteille de vin. En particulier, l'étiquette encode des informations d'ordre général sur la bouteille et auxquelles un utilisateur peut accéder au moyen de son smartphone. D'autre part, le marqueur chimique permet l'authentification de la bouteille après son analyse en laboratoire. Bien que cette solution améliore le niveau de sécurité d'authentification, le consommateur n'est pas en mesure d'authentifier le contenu de la bouteille par lui-même.

La demande de brevet N° US 2006/0086791 suggère une solution d'authentification mettant en œuvre une signature électronique générée à partir 'un motif de particules sur un suremballage d'une bouteille, et la comparaison de cette signature à une signature d'origine stockée dans une étiquette RFID dudit produit. Cette solution permet de vérifier l'authenticité du produit sans requérir d'un réseau de communications, cependant un lecteur spécifique est nécessaire pour lire le suremballage. De manière similaire, la demande de brevet N° FR 2667576A1 propose une solution d'authentification dans laquelle un microcircuit comportant un code d'authentification est intégré dans une fermeture de bouteille. Afin de vérifier les données stockées dans le microcircuit, la fermeture est pourvue d'un plot de contact coopérant avec un lecteur de code électronique. Ces solutions requièrent donc des dispositifs spécifiques et ne peuvent pas être mises en œuvre par le consommateur. La demande internationale WO03/038767 A1 propose une solution d'authentification au moyen d'au moins deux codes apposés sur un produit, ces codes sont décodés au moyen d'un algorithme et vérifiés au moyen d'une base de données distante. Un réseau de communication est donc nécessaire pour effectuer la vérification d'authenticité du produit.

### Objet de l'invention

La présente invention vise à pallier les inconvénients de l'art antérieur et à répondre aux contraintes ci-dessus énoncées en proposant un procédé d'authentification des moyens de fermeture d'un récipient, simple dans sa conception et dans son mode opératoire, économique et garantissant l'intégrité et l'authenticité du contenu de ce récipient.

Un autre objet de la présente invention est un ensemble de fermeture pour la mise en œuvre de ce procédé d'authentification permettant d'enregistrer des données relatives au contenu du récipient et de fournir ainsi des informations au consommateur final.

### BREVE DESCRIPTION DE L'INVENTION

A cet effet, l'invention concerne un procédé d'authentification, selon la revendication 1, d'un ensemble de fermeture d'un récipient, cet ensemble comportant une fermeture obturant une ouverture de ce récipient pour le passage d'un fluide ou d'au moins un objet contenu dans ce récipient et un suremballage recouvrant au moins ladite fermeture.

A titre purement illustratif, ce fluide peut être un liquide tel qu'un vin, un alcool, un spiritueux, un médicament ou encore un parfum, ou un produit pâteux ou visqueux tel qu'une crème. Alternativement, il peut s'agir d'au moins un objet solide tel que des produits alimentaires ou des médicaments.

De manière avantageuse, un tel procédé permet ainsi à un utilisateur ou à un consommateur de vérifier l'authenticité de l'ensemble de fermeture, et par conséquent, d'obtenir une garantie sur l'origine du contenu de ce récipient, sans qu'il lui soit nécessaire d'être placé dans une zone de couverture de communication (radio, internet, mobile ou autre) pour consulter une base de données distante.

L'authentification est réalisée de manière aisée et localement car toutes les données requises à cette authentification de l'ensemble de fermeture sont contenues dans cet ensemble.

Les étiquettes d'identification par radiofréquence sont avantageusement des étiquettes RFID.

Le suremballage peut être un suremballage protecteur ajusté sur un bouchon et, de préférence, sur au moins une partie du col du récipient dont l'ouverture est obturée par ce bouchon. Ce suremballage peut, par exemple, être un fourreau ou manchon thermoretractable.

Alternativement, ce suremballage sert à suremballer un objet conditionné dans un emballage primaire, cet objet comportant par exemple une fermeture de type couvercle pour obturer un récipient.
Ce suremballage recouvre au moins ladite fermeture et de préférence une partie du récipient.

Dans un mode de mise en œuvre particulier permettant d'établir l'intégrité et l'authenticité du contenu liquide d'un récipient tel qu'une bouteille, un flacon ou encore une carafe, l'invention concerne un procédé d'authentification de l'ensemble de fermeture d'un récipient comportant un col de récipient comprenant à l'intérieur une ouverture pour le passage d'un fluide contenu dans ce récipient, ladite ouverture du récipient étant obturée par un bouchon (fermeture) et une coiffe (suremballage) venant recouvrir au moins ledit bouchon.

Selon l'invention, ladite coiffe comprenant une première étiquette d'identification par radiofréquence comportant un identifiant unique de ladite coiffe, on réalise les étapes suivantes :
- lire l'identifiant unique de ladite coiffe,
- ledit bouchon comportant une seconde étiquette d'identification par radiofréquence comportant un identifiant unique dudit bouchon et une unité de stockage comportant un ensemble de données comprenant au moins des données relatives à un couple coiffe/bouchon comportant les identifiants uniques d'un bouchon et d'une coiffe associée à ce bouchon, lire l'identifiant unique dudit bouchon et comparer les identifiants de ladite coiffe et dudit bouchon ainsi lus avec les données relatives audit couple coiffe/bouchon dudit ensemble pour vérifier que le couple coiffe/bouchon en cours d'authentification coïncide avec le couple coiffe/bouchon défini dans ledit ensemble de données,
- émettre un signal de communication correspondant au résultat de cette vérification, et
- cet ensemble de fermeture comporte des moyens pour détruire au moins une des deux étiquettes d'identification dès la première ouverture dudit récipient.

Ce procédé d'authentification permet donc de manière très simple de garantir de manière absolue l'intégrité du contenu d'une bouteille.

Cet objectif est atteint d'une part, en stockant directement à l'intérieur du bouchon les identifiants uniques du bouchon et de la coiffe associée à ce bouchon lors de l'étape d'embouteillage, et d'autre part, en permettant à un utilisateur de lire l'identifiant unique de la coiffe grâce à un lecteur RFID et de vérifier l'authenticité de la fermeture du récipient en comparant les identifiants du couple bouchon/coiffe ainsi lus avec les données du couple bouchon/coiffe stockées en mémoire.

Bien entendu, la protection du contenu de la bouteille peut encore être renforcée en cryptant au moins certaines des données de cet ensemble avant enregistrement sur l'unité de stockage.

Cet ensemble de données peut comporter également des données relatives au contenu du récipient et/ou au récipient lui-même pour ainsi fournir des informations facilement accessibles au distributeur ou au consommateur final.

A titre purement illustratif, ces données peuvent être choisies parmi le millésime, la date d'embouteillage, le nom de l'embouteilleur, le nombre de bouteilles produites, le cépage ou le mélange de cépages, la teneur en sucre (brut, sec, extra-sec, ...), le volume nominal de la bouteille, la teneur en alcool, le ou les allergènes présents, la température de service et des combinaisons de ces éléments.

Dans différents modes de réalisation de ce procédé d'authentification, la présente invention concerne également les caractéristiques suivantes qui devront être considérées isolément ou selon toutes leurs combinaisons techniquement possibles :
- les étapes de comparaison et d'émission d'un signal de communication correspondant au résultat de cette vérification sont réalisées par une unité de traitement placée dans ladite fermeture,
- préalablement et après fermeture de ce récipient avec ledit ensemble de fermeture, on réalise les étapes suivantes :
   - lire l'identifiant unique dudit suremballage,
   - stocker ledit identifiant unique dudit suremballage dans ladite unité de stockage placée dans ladite fermeture en associant cet identifiant unique dudit suremballage avec l'identifiant unique de ladite fermeture pour former un couple suremballage/fermeture déterminé,
- ayant crypté au moins les données relatives au couple suremballage/fermeture au moyen d'une clé de codage, on décrypte lesdites données lors de l'étape de comparaison.
   De manière alternative, l'accès en écriture à ladite unité de stockage est protégé par une clé et un algorithme d'authentification pour empêcher toute modification des données relatives au couple suremballage/fermeture.
- les données stockées dans ladite unité de stockage comprenant également au moins des données relatives audit fluide ou audit au moins un objet contenu dans ledit récipient, on affiche sur un moyen d'affichage au moins une suggestion de commande, ladite ou au moins une desdites suggestions correspondant à l'affichage desdites données relatives audit fluide ou audit au moins un objet contenu dans ledit récipient,
- ladite seconde étiquette d'identification radiofréquence et ladite unité de stockage sont placées dans un logement interne à ladite fermeture.

La présente invention concerne également un ensemble de fermeture, selon la revendication 7, pour la mise en œuvre du procédé d'authentification tel que décrit précédemment, ledit récipient comportant une ouverture pour le passage d'un fluide ou d'au moins un objet contenu dans ce récipient.

A titre purement illustratif, la seconde étiquette peut être détruite lors de la manipulation de la fermeture pour libérer l'ouverture du récipient. Par d'exemple, le logement placé dans l'épaisseur de la fermeture et recevant la seconde étiquette peut comporter une zone sécable sur laquelle est directement placée cette seconde étiquette. Lors de la manipulation de la fermeture, la rupture de cette zone sécable entraîne le déchirement automatique d'une partie de la seconde étiquette rendant cette dernière inopérante.
Ce récipient est typiquement un flacon, une fiole ou une carafe en verre. Ce récipient en verre peut encore être habillé au moins partiellement de bois, de plastique ou de métal ou encore par des combinaisons de ces éléments.
Ce récipient peut contenir un vin tranquille ou effervescent, un spiritueux ou autre. Il peut encore s'agir d'un contenant tel qu'un pot, dont l'ouverture est obturable par une capsule à vis. Ce récipient peut recevoir un produit pâteux ou visqueux, tel qu'une crème.

Dans différents modes de réalisation de cet ensemble de fermeture, la présente invention concerne également les caractéristiques suivantes qui devront être considérées isolément ou selon toutes leurs combinaisons techniquement possibles :
- ladite fermeture comportant une tête et un corps, ledit logement est placé dans cette tête de la fermeture.
   De préférence, la fermeture étant un bouchon, la tête de bouchon est rigide ou semi-rigide. Le corps de bouchon, est quant à lui, avantageusement souple.
- ladite unité de traitement est reliée à ladite seconde étiquette pour émettre et recevoir lesdits signaux de communication.
   Alternativement, l'unité de traitement comporte un moyen de communication radiofréquence tel que RFID.
- l'étiquette d'identification dudit suremballage est reliée à une structure d'antenne radiofréquence.
- la fermeture comporte également une source d'énergie électrique pour alimenter au moins l'unité de traitement et/ou l'unité de stockage de données.
   A titre d'exemple, cette source d'énergie est une pile.
   Alternativement, au moins une partie de l'énergie nécessaire au fonctionnement d'au moins un des éléments suivants : unité de traitement, unité de stockage de données, moyens de communication et étiquette d'identification, est apportée par radiofréquence par un lecteur externe tel qu'une unité de gestion mobile.
- lesdits signaux de communication sans fil à courte portée sont basés sur un protocole de communication en champ proche (NFC - Near Field Communication),
- ledit logement est formé par un boîtier étanche.
   Ce boîtier joue plusieurs rôles.
   Il assure tout d'abord la protection du contenu du récipient contre d'éventuels contaminants qui pourraient provenir de l'électronique logée dans ce boîtier.
   Il garantit également le bon fonctionnement de cette électronique contre les agressions chimiques provenant du contenu dans le récipient, notamment lorsqu'il s'agit d'un alcool.
   Il protège enfin cette électronique des éventuels chocs que peut subir le récipient ainsi équipé d'un tel ensemble de fermeture.
   De manière avantageuse, ce boîtier est réalisé dans une matière plastique alimentaire lorsque le contenu du récipient est un aliment. Il peut encore s'agir d'un boitier réalisé en bois, céramique ou verre.
   De préférence, ce logement est réalisé dans le même matériau que la fermeture.
- ladite seconde étiquette d'identification par radiofréquence et ladite unité de traitement sont encapsulées dans une gangue durcie permettant de protéger ces éléments.
   Cette gangue est, de préférence, obtenue à partir d'une résine durcie. Avantageusement, il s'agit d'une résine alimentaire lorsque le contenu du récipient est un aliment. Comme décrit ci-dessus pour le boîtier, cette gangue permet de protéger l'électronique des agressions externes, d'autoriser le contact alimentaire et la durabilité de cette électronique dans le temps.
- ladite unité de traitement comporte des moyens de sécurisation permettant de sécuriser les données mémorisées dans ladite unité de stockage. A titre purement illustratif, ces moyens de sécurisation comprennent des moyens de cryptage pour crypter au moins les données relatives au couple coiffe/bouchon, et notamment les identifiants uniques de chacun de ces éléments, avant leur mémorisation sur ladite unité de stockage.

La présente invention concerne aussi un récipient comportant un col de récipient comprenant à l'intérieur une ouverture pour le passage d'un fluide contenu dans ledit récipient, ce récipient étant équipé d'un ensemble de fermeture tel que décrit précédemment.

La présente invention concerne encore l'utilisation dudit ensemble de fermeture tel que décrit précédemment pour la protection de vin, alcool ou spiritueux, médicament ou encore de produit pâteux ou visqueux alimentaire, à usage médical ou cosmétique contenus dans une bouteille, un pot, un tube, un flacon, une fiole ou encore une carafe.

A titre d'exemple, le récipient obturé par cet ensemble de fermeture peut contenir un liquide qui est un cosmétique tel qu'un parfum. Dans ce cas, la fermeture dudit ensemble peut comprendre une pompe d'aspiration reliée à un conduit d'aspiration du liquide contenu dans le récipient, ce conduit étant plongé au moins en partie dans le liquide reçu dans le volume interne du récipient.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement une vue éclatée et en perspective d'un ensemble de fermeture d'une bouteille comportant un col selon un premier mode de réalisation de la présente invention ;
- la Figure 2 est une autre vue éclatée de l'ensemble de fermeture de la Figure 1 ;

### DESCRIPTION DETAILLEE DE MODE DE REALISATION DE L'INVENTION

Tout d'abord, on note que les figures ne sont pas à l'échelle.

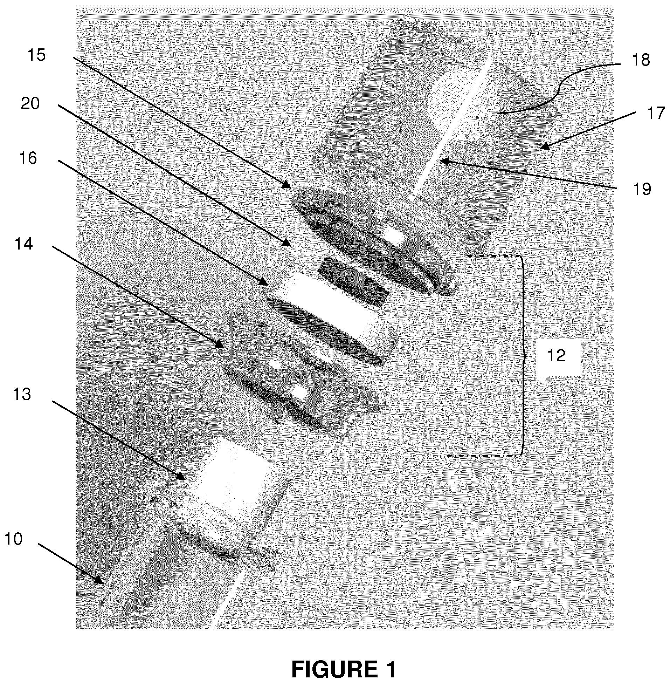

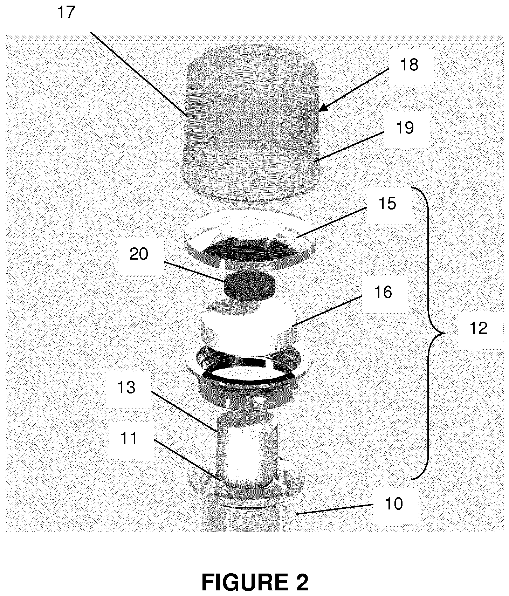

Les Figures 1 et 2 montrent de manière schématique une vue éclatée d'un ensemble de fermeture pour un récipient, ici une bouteille, selon un mode de réalisation particulier de la présente invention.

Ce récipient comporte un col 10 de récipient comprenant à l'intérieur une ouverture 11 pour le passage d'un liquide contenu dans ce récipient. Ce liquide est, par exemple, un vin ou un spiritueux.

Cette ouverture 11 est obturée par un bouchon comprenant une tête 12 de bouchon et un corps 13 de bouchon solidaire de cette tête 12. La tête 12 de bouchon comporte une base 14 creuse et un élément 15 ornemental formant couvercle pour fermer et cacher un boîtier 16 logé dans cette base 14 creuse de la tête 12 de bouchon. Ce boîtier 16 présente des dimensions lui permettant d'épouser la paroi intérieure de cette base 14 de manière à être maintenu en position une fois introduit dans celle-ci.

Ce boîtier 16 est ici un insert métallique tandis que le corps 13 de bouchon est réalisé dans un matériau souple. Ce dernier peut être réalisé en liège, en liège aggloméré ou en matière plastique de type élastomère telle qu'un élastomère thermoplastique (TPE).

Une coiffe 17 réalisée ici dans un matériau plastique transparent, est destinée à venir recouvrir le bouchon 12,13 et une partie du col 10 du récipient pour solidariser ce bouchon 12, 13 à ce récipient.

Cette coiffe 17 comporte une première étiquette 18 d'identification par radiofréquence, cette première étiquette 18 étant agencée sur la face interne de cette coiffe 17 de manière à être tournée vers le bouchon 12, 13. Elle est ainsi rendue non accessible.

Par ailleurs, cette coiffe 17 est configurée de manière à entraîner la destruction de cette première étiquette 18 d'identification dès la première ouverture du récipient.

Pour cela, cette première étiquette 18 est directement placée sur une bandelette 19 de déchirement de la coiffe 17, par exemple une bandelette appelée « tircell » ou plus simplement une bandelette d'ouverture limitée par deux lignes d'affaiblissement.

Ainsi, le retrait de la coiffe 17 pour accéder au bouchon 12, 13 en vue d'ouvrir le récipient, par manipulation de la bandelette 19 entraîne automatiquement la destruction de la première étiquette 18. Un contrefacteur ne peut donc réutiliser cette première étiquette 18 ayant un identifiant unique.

Le boitier 16 placé dans l'épaisseur de la tête de bouchon, reçoit une gangue durcie 20 encapsulant et protégeant un ensemble comportant une seconde étiquette d'identification par radiofréquence et un processeur.

Cette seconde étiquette d'identification stocke un identifiant unique du bouchon 12, 13. Le processeur comporte une unité de stockage pour stocker des données et est configuré pour générer et recevoir des signaux de communication.

Dans un mode de mise en œuvre du procédé d'authentification, on utilise une unité de gestion mobile (non représentée) apte à adresser et recevoir des signaux de communication basés sur le protocole NFC/RFID et comprenant un logiciel embarqué pour traiter ces signaux.

Cette unité de gestion mobile peut être un terminal mobile, par exemple un téléphone portable tel qu'un smartphone ou encore une tablette tactile portable.

Le logiciel de l'unité de gestion mobile lit l'identifiant unique de la première étiquette 18 d'identification par radiofréquence de la coiffe puis établit une communication cryptée avec le processeur placé dans la tête de bouchon 12 et relié à la seconde étiquette d'identification par radiofréquence.

Par le biais de cette communication, le logiciel du smartphone transmet l'identifiant unique de la première étiquette 18 d'identification de la coiffe au logiciel du processeur qui vérifie que cet identifiant est bien celui correspondant à l'identifiant unique associé à l'identifiant du bouchon en sortie de ligne d'embouteillage pour former le couple d'identifiants bouchon/coiffe stocké dans l'unité de stockage du processeur.

Le processeur transmet à l'unité le résultat de la vérification sous forme d'un signal de communication à courte portée. Le processeur de l'unité de gestion mobile affiche le résultat de la vérification sur un moyen d'affichage de cette unité de gestion mobile.

En outre, si l'unité de gestion mobile est dans une zone de couverture de communication (données téléphoniques, internet, ...) avec l'échange de données activé, le processeur de cette unité de gestion mobile peut à la demande de l'utilisateur, se connecter à une base de données du vendeur de spiritueux pour vérifier que les données du couple « coiffe/bouchon » sont bien enregistrées dans sa base.

## Revendications

1. Procédé d'authentification d'un ensemble de fermeture (12, 13) d'un récipient, ledit ensemble comportant une fermeture (12, 13) obturant une ouverture (11) dudit récipient pour le passage d'un fluide ou d'au moins un objet contenu dans ledit récipient et un suremballage (17) recouvrant au moins ladite fermeture (12, 13), **caractérisé en ce que** :
- ledit suremballage (17) comporte une première (18) étiquette d'identification par radiofréquence comportant un identifiant unique dudit suremballage (17),
- ladite fermeture (12, 13) comporte une seconde étiquette d'identification par radiofréquence comportant un identifiant unique de ladite fermeture (12, 13) et un processeur comprenant une unité de stockage, ladite unité de stockage comportant un ensemble de données comprenant au moins des données relatives à un couple suremballage/fermeture comportant les identifiants uniques d'une fermeture (12, 13) et d'un suremballage (17) associé à cette fermeture (12, 13), et **en ce qu'** on réalise les étapes suivantes :
- lire l'identifiant unique dudit suremballage (17) et lire l'identifiant unique de ladite fermeture (12, 13) au moyen d'une unité de gestion mobile comportant un lecteur NFC/RFID ;
- comparer au moyen du processeur les identifiants dudit suremballage (17) et de ladite fermeture (12, 13) ainsi lus, avec les données stockées dans l'unité de stockage dudit processeur et relatives audit couple suremballage/fermeture dudit ensemble de données pour vérifier que le couple suremballage/fermeture en cours d'authentification coïncide avec le couple suremballage/fermeture défini dans ledit ensemble de données,
- émettre au moyen du processeur un signal de communication correspondant au résultat de cette vérification, et **en ce que**
- ledit ensemble de fermeture (12, 13) comporte des moyens (19) pour détruire au moins la première étiquette d'identification (18) dès la première ouverture dudit récipient.

2. Procédé selon la revendication 1 ou 2, **caractérisé en ce que** préalablement et après fermeture (12, 13) de ce récipient avec ledit ensemble de fermeture (12, 13), on réalise les étapes suivantes :
- lire l'identifiant unique dudit suremballage (17) au moyen de l'unité de gestion, stocker ledit identifiant unique dudit suremballage (17) dans ladite unité de stockage du processeur placée dans ladite fermeture (12, 13) en associant cet identifiant unique dudit suremballage (17) avec l'identifiant unique de ladite fermeture (12, 13) pour former un couple suremballage/fermeture déterminé.

3. Procédé selon l'une quelconque des revendications 1 à 2, **caractérisé en ce qu'**ayant crypté au moins les données relatives au couple suremballage/fermeture au moyen d'une clé de codage, on décrypte lesdites données lors de l'étape de comparaison.

4. Procédé selon l'une quelconque des revendications 1 à 3, **caractérisé en ce que** l'accès en écriture à ladite unité de stockage du processeur est protégé par une clé et un algorithme d'authentification pour empêcher toute modification des données relatives au couple suremballage/fermeture.

5. Procédé selon l'une quelconque des revendications 1 à 4, **caractérisé en ce que** les données stockées dans ladite unité de stockage comprenant également au moins des données relatives audit fluide ou audit au moins un objet contenu dans ledit récipient, on affiche sur un moyen d'affichage de l'unité de gestion mobile au moins une suggestion de commande, ladite suggestion ou au moins une desdites suggestions correspondant à l'affichage desdites données relatives audit fluide ou audit au moins un objet contenu dans ledit récipient.

6. Procédé selon l'une quelconque des revendications 1 à 6, **caractérisé en ce que** ladite seconde étiquette d'identification radiofréquence et ledit processeur comportant ladite unité de stockage sont placées dans un logement interne de ladite fermeture (12, 13).

7. Ensemble de fermeture pour la mise en œuvre du procédé d'authentification selon l'une quelconque des revendications 1 à 6, ledit récipient comportant une ouverture (11) pour le passage d'un fluide ou d'au moins un objet contenu dans ledit récipient, **caractérisé en ce qu'**il comprend
- une fermeture (12, 13) destinée à obturer ladite ouverture (11), un suremballage (17) destiné à recouvrir au moins ladite fermeture (12,13), ledit suremballage (17) comprenant une première (18) étiquette d'identification par radiofréquence comportant un identifiant unique dudit suremballage (1 7), ladite fermeture (12,13) comportant un logement recevant une seconde étiquette d'identification par radiofréquence stockant un identifiant unique de ladite fermeture (12,13), et un processeur comportant une unité de stockage pour stocker des données, ledit processeur étant configuré pour générer et recevoir des signaux de communication, et des moyens (19) pour détruire au moins une des deux étiquettes d'identification dès la première ouverture dudit récipient.

8. Ensemble selon la revendication 7, **caractérisé en ce que** ladite fermeture comportant une tête (12) et un corps (13), ledit logement est placé dans ladite tête (12) de la fermeture.

9. Ensemble selon la revendication 7 ou 8, **caractérisé en ce que** ladite unité de traitement est reliée à ladite seconde étiquette pour émettre et recevoir lesdits signaux de communication.

10. Ensemble selon l'une quelconque des revendications 7 à 9, **caractérisé en ce que** lesdits signaux de communication sans fil à courte portée sont basés sur un protocole de communication en champ proche (NFC - Near Field Communication).

11. Ensemble selon l'une quelconque des revendications 7 à 10, **caractérisé en ce que** ledit logement est formé par un boîtier (16) étanche.

12. Ensemble selon l'une quelconque des revendications 7 à 11, **caractérisé en ce que** ladite seconde étiquette d'identification par radiofréquence et ladite unité de traitement sont encapsulées dans une gangue (20) durcie permettant de protéger ces éléments.

13. Récipient comportant un col de récipient comprenant à l'intérieur une ouverture (11) pour le passage d'un fluide contenu dans ledit récipient, ledit récipient étant équipé d'un ensemble de fermeture (12,13) selon l'une quelconque des revendications 7 à 12.

14. Utilisation dudit ensemble selon l'une quelconque des revendications 7 à 12 pour la protection de vin, alcool ou spiritueux, médicament ou encore de produit pâteux ou visqueux alimentaire, à usage médical ou cosmétique contenus dans une bouteille, un pot, un tube, un flacon, une fiole ou encore une carafe.

## Patentansprüche

1. Verfahren zur Authentifizierung einer Verschlusseinheit (12, 13) eines Behälters, wobei die Einheit einen Verschluss (12, 13) aufweist, der eine Öffnung (11) des Behälters für den Durchgang eines Fluids oder mindestens Objekts, das in dem Behälter enthalten ist, verschließt, und eine Umverpackung (17), die mindestens den Verschluss (12, 13) bedeckt, **dadurch gekennzeichnet, dass**:
- die Umverpackung (17) ein erstes (18) Funkfrequenz-Identifkationsetikett aufweist, aufweisend eine einzige Kennung der Umverpackung (17),
- der Verschluss (12, 13) ein zweites Funkfrequenz-Identifkationsetikett aufweist, aufweisend eine einzige Kennung des Verschlusses (12, 13) und einen Prozessor, umfassend eine Speichereinheit, wobei die Speichereinheit eine Dateneinheit aufweist, umfassend mindestens Daten, die sich auf ein Paar Umverpackung/Verschluss beziehen, aufweisend einzige Kennungen eines Verschlusses (12, 13) und einer Umverpackung (17), die diesem Verschluss (12, 13) zugeordnet ist, und dass die folgenden Schritte durchgeführt werden:
- Lesen der einzigen Kennung der Umverpackung (17) und Lesen der einzigen Kennung des Verschlusses (12, 13) mittels einer mobilen Verwaltungseinheit, die ein NFC/RFID-Lesegerät aufweist;
- Vergleichen, mittels des Prozessors, der derart gelesenen Kennungen der Umverpackung (17) und des Verschlusses (12, 13) mit den in der Speichereinheit des Prozessors gespeicherten und sich auf das Paar Umverpackung/Verschluss der Dateneinheit beziehenden Daten, um zu überprüfen, dass das sich in Authentifizierung befindliche Paar Umverpackung/Verschluss mit dem in der Dateneinheit definierten Paar Umverpackung/Verschluss übereinstimmt,
- Senden, mittels des Prozessors, eines Kommunikationssignals, das dem Ergebnis dieser Überprüfung entspricht, und dass
- die Verschlusseinheit (12, 13) Mittel (19) aufweist, um mindestens das erste Identifikationsetikett (18) ab der ersten Öffnung des Behälters zu zerstören.

2. Verfahren nach Anspruch 1 oder 2, **dadurch gekennzeichnet, dass** vor und nach dem Verschluss (12, 13) dieses Behälters mit der Verschlusseinheit (12, 13) die folgenden Schritte durchgeführt werden:
- Lesen der einzigen Kennung der Umverpackung (17) mittels der Verwaltungseinheit, Speichern der einzigen Kennung der Umverpackung (17) in der Speichereinheit des im Verschluss (12, 13) platzierten Prozessors durch Zuordnen dieser einzigen Kennung der Umverpackung (17) zu der einzigen Kennung des Verschlusses (12, 13), um ein bestimmtes Paar Umverpackung/Verschluss zu bilden.

3. Verfahren nach einem der Ansprüche 1 bis 2, **dadurch gekennzeichnet, dass**, wobei mindestens die sich auf das Paar Umverpackung/Verschluss beziehenden Daten mittels eines Codierschlüssels verschlüsselt wurden, die Daten während des Vergleichsschritts entschlüsselt werden.

4. Verfahren nach einem der Ansprüche 1 bis 3, **dadurch gekennzeichnet, dass** der Schreibzugriff auf die Speichereinheit des Prozessors durch einen Schlüssel und einen Authentifizierungsalgorithmus geschützt ist, um jede Änderung der sich auf das Paar Umverpackung/Verschluss beziehenden Daten zu verhindern.

5. Verfahren nach einem der Ansprüche 1 bis 4, **dadurch gekennzeichnet, dass**, wobei die in der Speichereinheit gespeicherten Daten ebenfalls mindestens Daten umfassen, die sich auf das Fluid oder das mindestens eine Objekt beziehen, das in dem Behälter enthalten ist, auf einem Anzeigemittel der mobilen Verwaltungseinheit mindestens ein Befehlsvorschlag angezeigt wird, wobei der Vorschlag oder mindestens einer der Vorschläge der Anzeige der Daten entspricht, die sich auf das Fluid oder das mindestens eine Objekt, das in dem Behälter vorhanden ist, beziehen.

6. Verfahren nach einem der Ansprüche 1 bis 6, **dadurch gekennzeichnet, dass** das zweite Funkfrequenz-Identifkationsetikett und der Prozessor, der die Speichereinheit aufweist, in einer inneren Aufnahme des Verschlusses (12, 13) platziert sind.

7. Verschlusseinheit für die Durchführung des Authentifizierungsverfahrens nach einem der Ansprüche 1 bis 6, wobei der Behälter eine Öffnung (11) für den Durchgang eines Fluids oder mindestens eines Objekts, das in dem Behälter enthalten ist, aufweist, **dadurch gekennzeichnet, dass** sie umfasst
- einen Verschluss (12, 13), der zum Verschließen der Öffnung (11) bestimmt ist, eine Umverpackung (17), die zum Abdecken mindestens des Verschlusses (12, 13) bestimmt ist, wobei die Umverpackung (17) ein erstes (18) Funkfrequenz-Identifkationsetikett umfasst, aufweisend eine einzige Kennung der Umverpackung (17), wobei der Verschluss (12, 13) eine Aufnahme aufweist, die ein zweites Funkfrequenz-Identifkationsetikett aufnimmt, das eine einzige Kennung des Verschlusses (12, 13) speichert, und einen Prozessor, der eine Speichereinheit aufweist, um Daten zu speichern, wobei der Prozessor konfiguriert ist, um Kommunikationssignale zu erzeugen und zu empfangen, und Mittel (19), um mindestens eins der zwei Identifikationsetiketten ab der ersten Öffnung des Behälters zu zerstören.

8. Einheit nach Anspruch 7, **dadurch gekennzeichnet, dass** der Verschluss einen Kopf (12) und einen Körper (13) aufweist, wobei die Aufnahme in dem Kopf (12) des Verschlusses platziert ist.

9. Einheit nach Anspruch 7 oder 8, **dadurch gekennzeichnet, dass** die Verarbeitungseinheit mit dem zweiten Etikett verbunden ist, um die Kommunikationssignale zu senden und zu empfangen.

10. Einheit nach einem der Ansprüche 7 bis 9, **dadurch gekennzeichnet, dass** die drahtlosen Kommunikationssignale kurzer Reichweite auf einem Nahfeld-Kommunikationsprotokoll (NFC - Near Field Communication) basieren.

11. Einheit nach einem der Ansprüche 7 bis 10, **dadurch gekennzeichnet, dass** die Aufnahme von einem dichten Gehäuse (16) gebildet ist.

12. Einheit nach einem der Ansprüche 7 bis 11, **dadurch gekennzeichnet, dass** das zweite Funkfrequenz-Identifkationsetikett und die Verarbeitungseinheit in einer gehärteten Matrix (20) eingekapselt sind, um diese Elemente zu schützen.

13. Behälter, aufweisend einen Behälterhals, umfassend im Inneren eine Öffnung (11) für den Durchgang eines Fluids, das in dem Behälter enthalten ist, wobei der Behälter mit einer Verschlusseinheit (12, 13) nach einem der Ansprüche 7 bis 12 ausgestattet ist.

14. Verwendung der Einheit nach einem der Ansprüche 7 bis 12 für den Schutz von Wein, Alkohol oder Spirituosen, Medikamenten oder auch pastösem oder viskösem Lebensmittelprodukt, zur medizinischen oder kosmetischen Verwendung, enthalten in einer Flasche, einem Tiegel, einer Tube, einem Flakon, einem Röhrchen oder auch in einer Karaffe.

## Claims

1. A method for authenticating a closure assembly (12, 13) of a container, said assembly comprising a closure (12, 13) closing an opening (11) of said container for the passage of a fluid or of at least one object contained in said container, and an overpack (17) covering at least said closure (12, 13),
**characterized in that**:
- said overpack (17) comprises a first radiofrequency identification tag (18) having a unique identifier of said overpack (17),
- said closure (12, 13) comprises a second radiofrequency identification tag having a unique identifier of said closure (12, 13) and a processor comprising a storage unit, said storage unit comprising a data set comprising at least data relating to an overpack/closure pair which comprises the unique identifiers of a closure (12, 13) and an overpack (17) associated with this closure (12, 13), and **in that** the following steps are carried out:
- reading the unique identifier of said overpack (17), and reading the unique identifier of said closure (12, 13) with a mobile management unit comprising a NFC/RFID reader;
- comparing, with the processor, the identifiers of said overpack (17) and said closure (12, 13) so read with the data stored in the storage unit of said processor and relating to said overpack/closure pair of said data set in order to verify that the overpack/closure pair being authenticated coincides with the overpack/closure pair defined in said data set,
- emitting with the processor a communication signal corresponding to the result of this verification, and **in that**
- said closure assembly (12, 13) comprises means (19) for destroying the first identification tag (18) upon the first opening of said container.

2. The method according to Claim 1 or 2, **characterized in that**, before and after closing (12, 13) said container with said closure assembly (12, 13), the following steps are carried out:
- reading the unique identifier of said overpack (17) with the management unit,
- storing said unique identifier of said overpack (17) in said storage unit of the processor placed in said closure (12, 13) by associating said unique identifier of said overpack (17) with the unique identifier of said closure (12, 13) to form a specified overpack/closure pair.

3. The method according to any one of Claims 1 to 2, **characterized in that**, after having encrypted at least the data relating to the overpack/closure pair by means of a coding key, said data is decrypted during the step of comparison.

4. The method according to any one of Claims 1 to 3, **characterized in that** the write access to said storage unit of the processor is protected by a key and an authentication algorithm to prevent any modification of the data relating to the overpack/closure.

5. The method according to any one of Claims 1 to 4, **characterized in that** the data stored in said storage unit also comprising at least data relating to said fluid or to said at least one object contained in said container, by which at least one command suggestion is displayed on a display means of the mobile management unit, said suggestion or at least one of said suggestions corresponding to the display of said data relating to said fluid or to said at least one object contained in said container.

6. The method according to any one of Claims 1 to 6, **characterized in that** said second radiofrequency identification tag and said processor comprising said storage unit are placed in an internal housing of said closure (12, 13).

7. A closure assembly for carrying out the method of authentication according to any one of Claims 1 to 6, said container comprising an opening (11) for the passage of a fluid or at least one object contained in said container, **characterized in that** it comprises:
- a closure (12, 13) for closing said opening (11),
- an overpack (17) for covering at least said closure (12, 13),
- said overpack (17) comprising a first radiofrequency identification tag (18) having a unique identifier of said overpack (17),
- said closure (12, 13) having a housing receiving a second radiofrequency identification tag storing a unique identifier of said closure (12, 13), and a processor having a storage unit for storing data, said processor being configured to generate and receive communication signals, and
- means (19) for destroying at least one of the two identification tags upon the first opening of said container.

8. The assembly according to Claim 7, **characterized in that** said closure comprising a head (12) and a body (13), said housing is placed in said head (12) of the closure.

9. The assembly according to Claim 7 or 8, **characterized in that** said processing unit is connected to said second tag to transmit and receive said communication signals.

10. Assembly according to any one of Claims 7 to 9, **characterized in that** said short range wireless communication signals are based on a Near Field Communication (NFC) protocol.

11. The assembly according to any one of Claims 7 to 10, **characterized in that** said housing is formed by a sealed housing (16).

12. The assembly according to any one of Claims 7 to 11, **characterized in that** said second radio frequency identification tag and said processing unit are encapsulated in a hardened matrix (20) to protect these elements.

13. A container having a container neck comprising an opening (11) therein for the passage of a fluid contained in said container, said container being equipped with a closure assembly (12, 13) according to any one of Claims 7 to 12.

14. The use of said assembly according to any one of Claims 7 to 12 for protecting wine, alcohol or spirits, medicament or pasty or viscous foodstuff, for medical or cosmetic use, contained in a bottle, a pot, a tube, a flask, a vial or a carafe.
